# EUROPEAN PATENT APPLICATION

(11) **EP 1 484 452 A1**
(43) Date of publication of application: **08.12.2004**
(21) Application number: 04012649.2
(22) Date of filing: 27.05.2004
(51) Int. Cl.: E02F 9/18, B60R 21/13, B66F 9/075

(54) **Working vehicle**

(30) Priority: 02.06.2003 JP 2003157214
(71) Applicant: KOMATSU LTD., Minato-ku, Tokyo 107-8414 (JP); Komatsu Zenoah Co., Kawagoe-City, Saitama (JP)
(72) Inventor: Otsuka, Kinichi, Kawagoe-City Saitama (JP); Shimizu, Sachio, Kawagoe-City Saitama (JP)
(74) Representative: Goddar, Heinz J., Dr.

(57) **Abstract**

A working vehicle (1) which comprises a work machine (4) in the front section of the vehicle body (3) and is provided with a counterweight (10) in the rear section of the vehicle body (3), in which the counterweight (10) is formed in a condition that the upper surface (10t) of the counterweight (10) is positioned higher than the seating surface (5s) of an operator seat (5) provided in the vehicle body, and in which a moment of the rear section of the vehicle can be increased without forming the counterweight (10) to bulge backward, thus the work range for the work machine can be expanded without damaging the work performance of other functions.

## Description

### BACKGROUND OF THE INVENTION

### 1. Field of the Invention

The present invention relates to a working vehicle which comprises a work machine in the front section of the vehicle body and is provided with a counterweight in the rear section of the vehicle body.

### 2. Description of the Related Art

Conventionally in a working vehicle equipped with a work machine on the front section of the vehicle, a configuration in which a counterweight is attached to the rear section of the vehicle is used in order to strike a balance between the front and rear sections when operating the work machine (see Japanese Patent Application Laid-open No. 10-140607, for example).

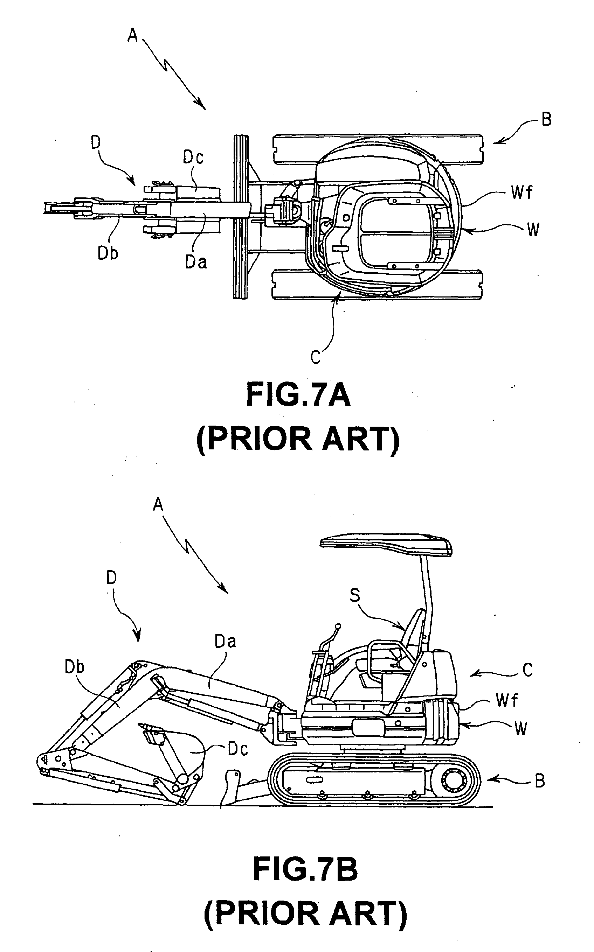

Fig. 7A and Fig. 7B illustrate a conventional small hydraulic shovel as an example of the working vehicle. This small hydraulic shovel (working vehicle) A comprises a lower traveling body B having a traveling mechanism in a crawler form, and an upper swing body C mounted on and supported by the lower traveling body B.

An excavation work machine D having a boom Da, an arm Db and a bucket Dc is installed in the front section of the upper swing body C, and an operator seat S on which an operator (not shown) sits is installed in a substantially central section of the upper swing body C.

At the same time, in the rear section of the upper swing body C, an engine for traveling/work machine (not shown) is mounted, and a counterweight W for striking a balance between the front and rear sections when operating the excavation work machine D is also attached.

Here, an outer surface Wf of the rear section side of the counterweight W is formed in a substantially circular arc form with a pivot (not shown) as a center, in order to reduce a rear end turning radius of the upper swing body C as much as possible.

As for a maximum excavation radius for the small hydraulic shovel A described above, that is, a work range in a situation where the excavation work machine D is stretched fully, it goes without saying that the work range is closely associated with the weight of the counterweight W.

In other words, by increasing the weight of the counterweight W to move the position of center of gravity backward and increasing the moment of the rear section of the vehicle, it is made possible to employ an excavation work machine D with a long reach (the arm length of the excavation work machine D when stretched fully) Consequently, it is possible to expand the work range of the excavation work machine D, that is, it is possible to improve the work performance of the small hydraulic shovel A.

A configuration, in which the volume of the counterweight W is increased by forming the rear section of the counterweight W to bulge backward significantly, can be considered as one method for increasing the weight of the counterweight W, in order to improve the work performance of the small hydraulic shovel A.

However, when the counterweight W bulges backward, a rear end turning radius of the upper swing body C to which the counterweight W is attached unnecessarily becomes large, which results in damaging the ultra-tight turning characteristics at the rear of the small hydraulic shovel A.

### SUMMARY OF THE INVENTION

With the foregoing in view, an object of the present invention is to provide a working vehicle which comprises a work machine in the front section of the vehicle body and is provided with a counterweight in the rear section of the vehicle body, wherein a moment of the rear section of the vehicle can be increased without forming the counterweight to bulge backward, thus the work range of the work machine can be expanded without damaging the work performance of other functions.

A working vehicle concerning a first invention is a working vehicle which comprises a work machine in a front section of a vehicle body and is provided with a counterweight in a rear section of the vehicle body, wherein the counterweight is formed in a condition that an upper surface of the counterweight is positioned higher than a seating surface of an operator seat provided in the vehicle body.

According to the above configuration, it is possible to increase the weight of the counterweight without forming the counterweight to bulge backward and to expand the work range of the excavation work machine without damaging the ultra-tight turning characteristics at the rear of, for example, a small hydraulic shovel, whereby the work performance of the working vehicle can be significantly improved.

A working vehicle concerning a second invention is, according to the first invention, characterized in that a ROPS (Roll-Over Protective Structure) canopy having a pair of right and left columns is attached to the upper section of the counterweight.

According to the above configuration, the ROPS canopy employing a "Roll-Over Protective Structure" has a large weight due to its firm structure for securing the strength. By attaching the ROPS canopy to the counterweight the moment of the rear section of the vehicle increases significantly, which, for example, allows expansion of the work range of the excavation work machine of the small hydraulic shovel, thus the work performance of the working vehicle can be significantly improved.

A working vehicle concerning a third invention is, according to the first invention, characterized in that an outer face of the rear section side of the counterweight is formed in a substantially circular arc form with a vertical axis as the center which is positioned at front of the counterweight.

According to the above configuration, in order to reduce a rear end turning radius of the upper swing body, for example, for the small hydraulic shovel in which the outer face of the counterweight is formed in roughly a circular arc form, it is possible to expand the work range for the excavation work machine without damaging the ultra-tight turning characteristics at the rear, thus the work performance of the working vehicle can be significantly improved.

A working vehicle concerning a fourth invention is, according to the first invention, characterized in that an opening for maintenance is provided in the counterweight.

According to the above configuration, by providing the opening for maintenance, it is possible to readily carry out checking of the oil level and maintenance/checking of a steel pipe and the like of a filter, for an engine installed in an engine room located in the front section of the counterweight.

A working vehicle concerning a fifth invention, according to the first invention, is characterized in that the counterweight is produced by casting.

According to the above configuration, it is possible to readily produce the counterweight having a high mass and a complex form by producing the counterweight with casting.

### BRIEF DESCRIPTION OF THE DRAWINGS

Fig. 1 is an overall side view showing an example of the working vehicle according to the present invention;
Fig. 2 is an overall plan view of the working vehicle shown in Fig. 1;
Fig. 3 is an external perspective view showing the counterweight of the working vehicle shown in Fig. 1;
Fig. 4 is an external perspective view showing a condition in which the ROPS canopy is attached to the counterweight shown in Fig. 3;
Fig. 5 is an external perspective view showing another embodiment of the counterweight;
Fig. 6 is an external perspective view showing a condition in which the ROPS canopy is attached to the counterweight shown in Fig. 5; and
Fig 7A and Fig. 7B are an overall plan view and overall side view respectively showing a conventional working vehicle.

### DESCRIPTION OF THE PREFERRED EMBODIMENTS

The working vehicle according to the present invention will be described hereinbelow on the basis of the figures showing embodiments.

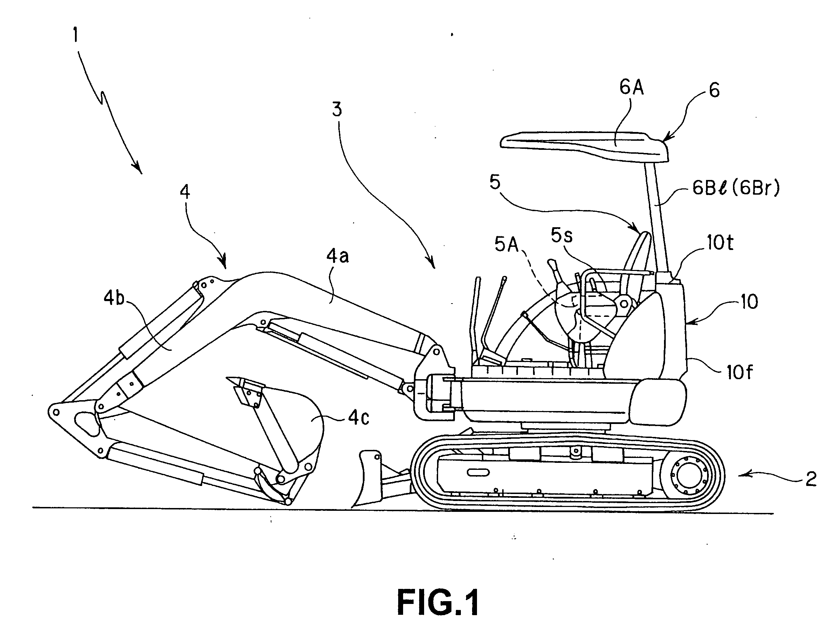

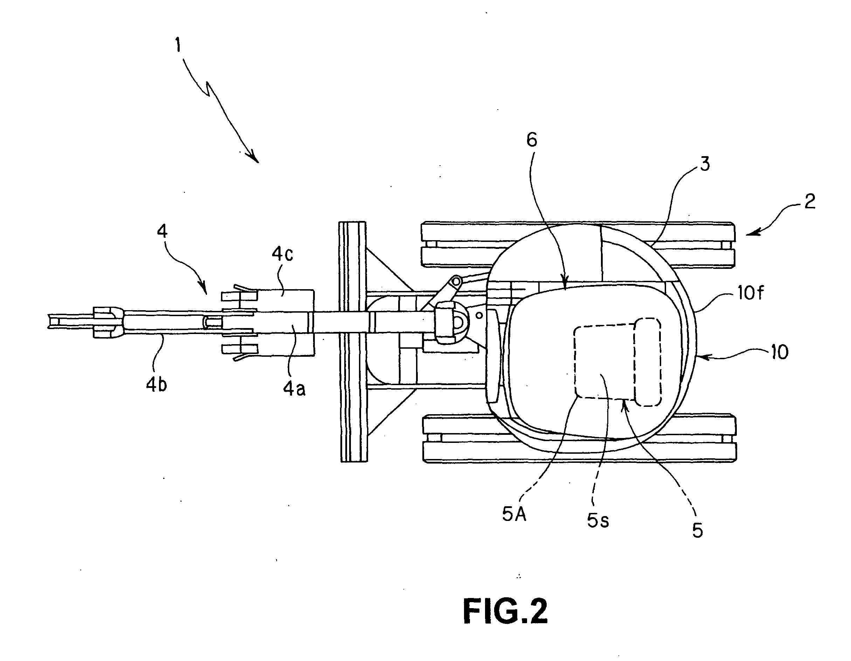

Fig. 1 through Fig. 4 illustrate the embodiments in which the present invention is applied to a small hydraulic shovel that is one aspect of the working vehicle. The small hydraulic shovel (working vehicle) 1 comprises a lower traveling body 2 having a traveling mechanism in a crawler form and an upper swing body (vehicle body) 3 mounted on and supported by this lower traveling body 2.

An excavation work machine (work machine) 4 having a boom 4a, an arm 4b and a bucket 4c is installed in the front section of the upper swing body 3, and an operator seat 5 on which an operator (not shown) sits is installed in a substantially central section of the upper swing body 3.

At the same time, in the rear section of the upper swing body 3, an engine for traveling/work machine (not shown) is mounted and the operator seat 5 is installed on a cover that covers this engine (not shown).

Furthermore, a counterweight 10, which is for striking a balance between the front and rear sections of the small hydraulic shovel 1 during operation of the excavation work machine 4, is attached to the rear section of the upper swing body 3. Also a ROPS canopy 6 having a canopy 6A and a pair of right and left columns 6Br, 6B1 is attached to the upper section of the counterweight 10.

Here, the counterweight 10 is an attachment produced by casting and is detachably attached to the rear section of the upper swing body 3.

Moreover, the counterweight 10 is formed in a condition in which an upper face 10t, which is placed on the uppermost section of the counterweight 10 when the counterweight 10is mounted on the rear section of the upper swing body 3, is positioned higher than a seating surface 5s of a seat 5A of the operator seat 5.

Furthermore, an outer surface 10f on the rear section side of the counterweight 10 is formed in a substantially circular arc form with a vertical axis positioned at front of the counterweight 10, specifically, with a pivot (not shown) of the upper swing body 3, as the center.

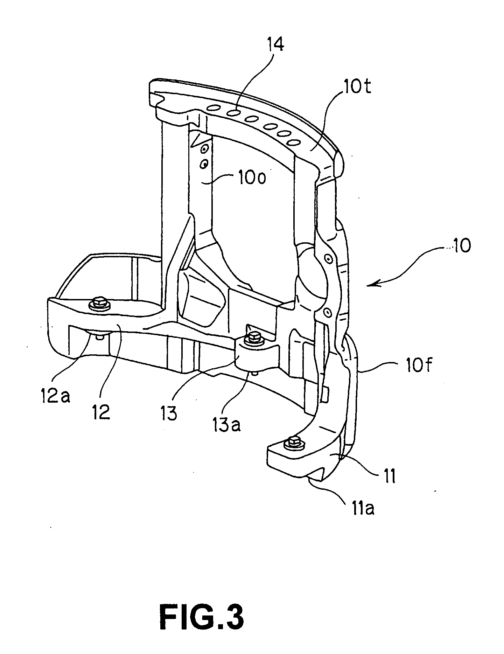

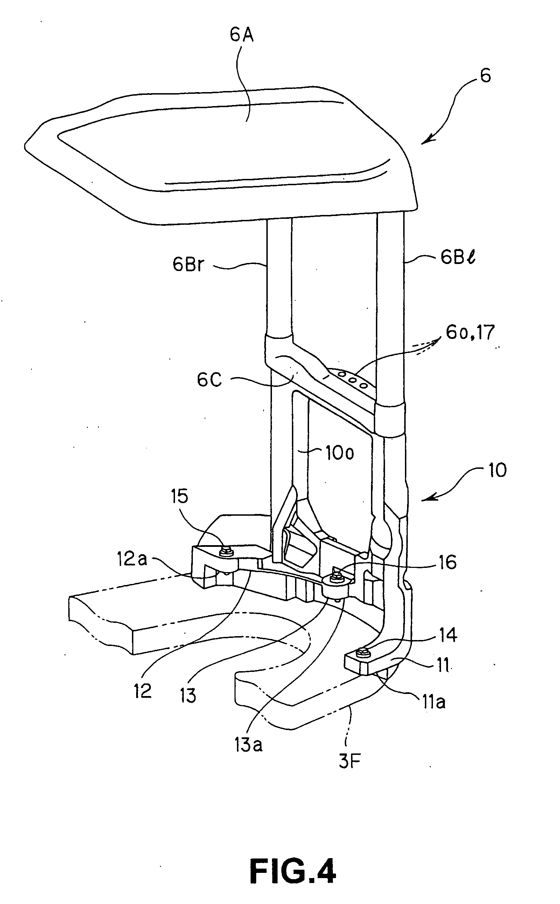

As shown in Fig. 3 and Fig. 4, an extended section 11 extending in a substantially circular arc form to the left, an extended section 12 extending in a substantially circular arc form to the right, and a bracket 13 projecting at the center are provided in the lower section of the counterweight 10, wherein an attachment seat 11 a, attachment seat 12a and attachment seat 13a are formed respectively on each tip of the extended section 11, extended section 12 and bracket 13. The counterweight 10 is attached to a frame 3F (see Fig.4) of the upper swing body 3 by means of bolts 14, 15 and 16 through these attachment seats 11a, 12a and 13a.

Also, in a substantially central region of the counterweight 10, there is formed an opening 10o for maintenance constituted by a through-hole, circumference of which is surrounded, whereby it is possible to readily carry out checking of the oil level and maintenance/checking of the steel pipe and the like of the filter through the opening 10o, for the engine (not shown) installed in the front region of the counterweight 10.

At the same time, the ROPS canopy 6 is attached to the upper face 10t of the counterweight 10 by inserting bolts 17, 17...into bolt holes 14, 14...provided on the upper face 10t of the counterweight 10 and into bolt holes 6o, 6o...of an attachment bracket 6C of the ROPS canopy 6, and by fastening them with nuts (not shown).

According to the small hydraulic shovel 1 of the abovementioned configuration, by positioning the upper face 10t of the counterweight 10 higher than the seating surface 5s of the operator seat 5, it is possible to increase the weight of the counterweight 10 without forming the counterweight 10 to bulge backward.

Consequently, the work range for the excavation work machine 4 can be expanded without damaging the ultra-tight turning characteristics at the rear of the upper swing body 3, thus the work performance of the small hydraulic shovel 1 can be significantly improved.

According to the small hydraulic shovel 1 of the abovementioned configuration, the moment of the rear section of the small hydraulic shovel 1 is increased by attaching the ROPS canopy 6 to the upper section of the counterweight 10, which enables expansion of the work range of the excavation work machine 4, thus the work performance of the small hydraulic shovel 1 can be significantly improved.

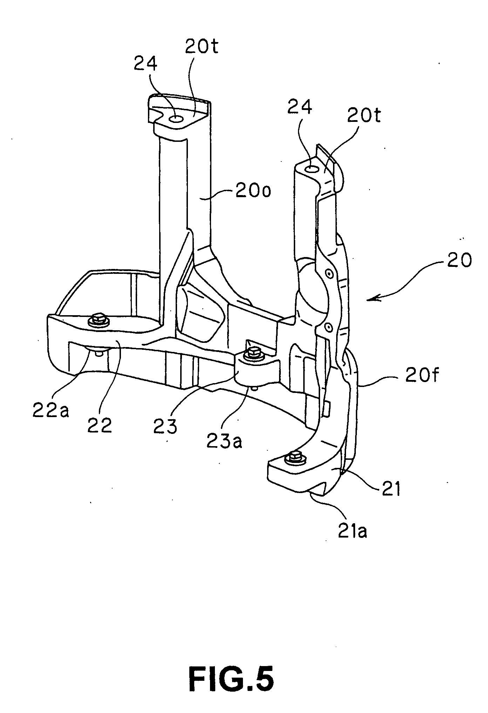

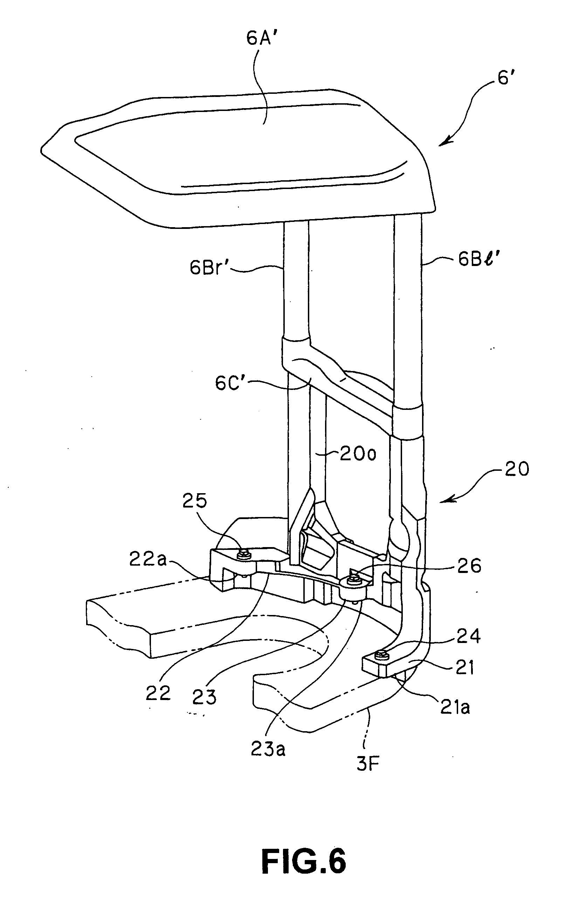

Fig. 5 and Fig. 6 illustrate another embodiment of the counterweight. In a substantially central region of the counterweight 20, there is formed the opening 20o for maintenance constituted by a cutout the top of which is opened.

Here, the configuration of the counterweight 20 is basically same as the counterweight 10 of the small hydraulic shovel 1 shown in Fig. 1 through Fig. 4, except for the form of the opening 20o described above. Therefore, explanations regarding the components of the counterweight 20 that have the same functions as those of the counterweight 10 are omitted, while assigning, in Fig. 5 and Fig. 6, the reference numerals in the 20's (by adding 10 to the reference numerals of Fig. 1 through Fig. 4).

On the other hand, the ROPS canopy 6' is attached to the upper face 20t of the counterweight 20 by inserting bolts (not shown) into bolt holes 24, 24 provided on the upper face 20t of the counterweight 20 and into bolt holes (not shown) of the attachment bracket 6C' of the ROPS canopy 6', and by fastening them with nuts (not shown).

It is certainly the case for the small hydraulic shovel of the abovementioned configuration as well, in which the counterweight 20 and ROPS canopy 6' are provided, that it is possible to achieve the same functional effects as the small hydraulic shovel 1 shown in Fig. 1 through Fig. 4 can be achieved, that is, the effects that the work performance can be significantly improved.

The embodiments described above illustrated the examples in which the present invention is applied to a small hydraulic shovel, which is one aspect of the working vehicle. However, as long as it is a working vehicle that comprises a work machine in the front section of the vehicle body and is provided with a counterweight in the rear section of the vehicle body, it goes without saying that the present invention can be applied effectively to various working vehicles as well besides small hydraulic shovels.

The features disclosed in the foregoing description, in the claims and/or in the accompanying drawings may, both separately and in any combination thereof, be material for realising the invention in diverse forms thereof.

## Claims

1. A working vehicle which comprises a work machine in a front section of a vehicle body and is provided with a counterweight in a rear section of the vehicle body,
wherein the counterweight is formed in a condition that an upper surface of the counterweight is positioned higher than a seating surface of an operator seat provided in the vehicle body.

2. The working vehicle according to claim 1, wherein a ROPS canopy having a pair of right and left columns is provided on an upper section of the counterweight.

3. The working vehicle according to claim 1, wherein an outer face of a rear section side of the counterweight is formed in a substantially circular arc form with a vertical axis as a center positioned in a front section of the counterweight.

4. The working vehicle according to claim 1, wherein an opening for maintenance is provided in the counterweight.

5. The working vehicle according to claim 1, wherein the counterweight is produced by casting.
